(19) 

Europäisches
Patentamt
European
Patent Office
Office européen
des brevets

(11) **EP 4 554 216 A1**

(12) **EUROPEAN PATENT APPLICATION**
published in accordance with Art. 153(4) EPC

(43) Date of publication:
**14.05.2025 Bulletin 2025/20**

(21) Application number: **23834718.1**

(22) Date of filing: **29.06.2023**

(51) International Patent Classification (IPC):
**H04N 19/40** $^{(2014.01)}$     **G06T 9/00** $^{(2006.01)}$
**H04N 13/00** $^{(2018.01)}$

(52) Cooperative Patent Classification (CPC):
**G06T 9/00; G06T 15/04; G06T 15/10; H04N 13/00;
H04N 19/40; H04N 19/44**

(86) International application number:
**PCT/CN2023/103922**

(87) International publication number:
**WO 2024/007951 (11.01.2024 Gazette 2024/02)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **06.07.2022  CN 202210800663**

(71) Applicant: **Vivo Mobile Communication Co., Ltd.
Dongguan, Guangdong 523863 (CN)**

(72) Inventors:
• **ZOU, Wenjie**
  **Dongguan, Guangdong 523863 (CN)**
• **ZHANG, Wei**
  **Dongguan, Guangdong 523863 (CN)**
• **YANG, Fuzheng**
  **Dongguan, Guangdong 523863 (CN)**
• **LV, Zhuoyi**
  **Dongguan, Guangdong 523863 (CN)**

(74) Representative: **Conti, Marco
Bugnion S.p.A.
Via di Corticella, 87
40128 Bologna (IT)**

(54) **ENCODING METHOD, APPARATUS AND DEVICE, AND DECODING METHOD, APPARATUS
AND DEVICE**

(57)     This application discloses an encoding method and apparatus, a decoding method and apparatus, and a device, and relates to the field of encoding and decoding technologies. The encoding method includes: reconstructing, on an encoder side, geometry information and connectivity information for a target three-dimensional mesh based on an encoding result of the geometry information and connectivity information of the target three-dimensional mesh; determining, on the encoder side based on the reconstructed geometry information and connectivity information, N predicted texture coordinates of each vertex in the target three-dimensional mesh by means of predicting vertices from multiple encoded triangles, where N is a positive integer greater than 1; and encoding, on the encoder side, a texture coordinate residual of each vertex; where the texture coordinate residual of the vertex is determined based on the N predicted texture coordinates of the vertex.

```
Reconstruct geometry information and connectivity
information for a target three-dimensional mesh based on
encoding results of the geometry information and
connectivity information of the target three-dimensional
mesh                                                        ── S101

                          ↓

Determine, based on the reconstructed geometry information
and connectivity information, N predicted texture coordinates
of each vertex in the target three-dimensional mesh by means
of predicting vertices from multiple encoded triangles        ── S102

                          ↓

Encode a texture coordinate residual of each vertex          ── S103
```

FIG. 1

EP 4 554 216 A1

**Description**

**CROSS-REFERENCE TO RELATED APPLICATIONS**

This application claims priority to Chinese Patent Application No. 202210800663.6, filed in China on July 06, 2022, which is incorporated herein by reference in its entirety.

**TECHNICAL FIELD**

This application pertains to the field of encoding and decoding technologies, and particularly relates to an encoding method and apparatus, a decoding method and apparatus, and a device.

**BACKGROUND**

Texture coordinates, also referred to as UV coordinates, are information that describes vertex texture of a three-dimensional mesh. In three-dimensional meshes, two-dimensional projection is performed on surface texture to form a two-dimensional texture map. UV coordinates indicate positions of three-dimensional vertex texture on the two-dimensional texture map, and are in one-to-one correspondence to geometry information. In this way, the texture coordinates determine a texture map of the three-dimensional mesh, are crucial to three-dimensional meshes. The data amount of UV coordinates accounts for a large proportion in the three-dimensional mesh. However, the existing parallelogram prediction method or similar triangle-based prediction algorithm have unsatisfying compression effects, affecting the encoding efficiency of texture coordinates.

**SUMMARY**

Embodiments of this application provide an encoding method and apparatus, a decoding method and apparatus and a device, so as to solve the problem of low texture coordinate encoding efficiency due to unsatisfying compression effects of the parallelogram prediction method or similar triangle-based prediction algorithm used in the prior art for encoding UV coordinates.

According to a first aspect, an encoding method is provided. The method includes:

reconstructing, on an encoder side, geometry information and connectivity information for a target three-dimensional mesh based on an encoding result of the geometry information and connectivity information of the target three-dimensional mesh;

determining, on the encoder side based on the reconstructed geometry information and connectivity information, N predicted texture coordinates of each vertex in the target three-dimensional mesh by means of predicting vertices from multiple encoded triangles, where N is a positive integer greater than 1; and

encoding, on the encoder side, a texture coordinate residual of each vertex; where the texture coordinate residual of the vertex is determined based on the N predicted texture coordinates of the vertex.

According to a second aspect, a decoding method is provided. The method includes:

decoding, on a decoder side, an obtained bitstream corresponding to a target three-dimensional mesh to obtain geometry information and connectivity information of the target three-dimensional mesh, and decoding an obtained bitstream corresponding to each vertex to obtain a texture coordinate residual of each vertex;

determining, on the decoder side based on the geometry information and connectivity information, N predicted texture coordinates of each vertex in the target three-dimensional mesh by means of predicting vertices from multiple decoded triangles, where N is a positive integer greater than 1; and

determining, on the decoder side, real texture coordinates of each vertex based on the N predicted texture coordinates of each vertex and the texture coordinate residual of each vertex.

According to a third aspect, an encoding apparatus is provided. The apparatus includes:

a reconstructing module, configured to reconstruct geometry information and connectivity information for a target three-dimensional mesh based on an encoding result of the geometry information and connectivity information of the target three-dimensional mesh;

a determining module, configured to determine, based on the reconstructed geometry information and connectivity information, N predicted texture coordinates of each vertex in the target three-dimensional mesh by means of predicting vertices from multiple encoded triangles, where N is a positive integer greater than 1; and
an encoding module, configured to encode a texture coordinate residual of each vertex; where the texture coordinate residual of the vertex is determined based on the N predicted texture coordinates of the vertex.

According to a fourth aspect, a decoding apparatus is provided. The apparatus includes:

a decoding module, configured to: decode an obtained bitstream corresponding to a target three-dimensional mesh to obtain geometry information and connectivity information of the target three-dimensional mesh, and decode an obtained bitstream corresponding to each vertex to obtain a texture coordinate residual of each vertex;
a first determining module, configured to determine, based on the geometry information and connectivity information, N predicted texture coordinates of each vertex in the target three-dimensional mesh by means of predicting vertices from multiple decoded triangles, where N is a positive integer greater than 1; and
a second determining module, configured to determine real texture coordinates of each vertex based on the N predicted texture coordinates of each vertex and the texture coordinate residual of each vertex.

According to a fifth aspect, a terminal is provided. The terminal includes a processor and a memory, and a program or instructions capable of running on the processor are stored on the memory. When the program or instructions are executed by the processor, the steps of the method according to the first aspect or the steps of the method according to the second aspect are implemented.

According to a sixth aspect, a readable storage medium is provided, where a program or instructions are stored in the readable storage medium, and when the program or the instructions are executed by a processor, the steps of the method according to the first aspect are implemented, or the steps of the method according to the second aspect are implemented.

According to a seventh aspect, a chip is provided. The chip includes a processor and a communication interface, where the communication interface is coupled to the processor, and the processor is configured to run a program or instructions to implement the method according to the first aspect or the method according to the second aspect.

According to an eighth aspect, a computer program/program product is provided. The computer program/program product is stored in a storage medium, and the computer program/program product is executed by at least one processor to implement steps of the method according to the first aspect or steps of the method according to the second aspect.

According to a ninth aspect, a system is provided. The system includes an encoder side and a decoder side, where the encoder side performs the steps of the method according to the first aspect and the decoder side performs the steps of the method according to the second aspect.

In an embodiment of this application, geometry information and connectivity information are reconstructed for a target three-dimensional mesh based on encoding results of the geometry information and connectivity information of the target three-dimensional mesh; N predicted texture coordinates of each vertex in the target three-dimensional mesh are determined based on the reconstructed geometry information and connectivity information by means of predicting vertices from multiple encoded triangles; and a texture coordinate residual of each vertex is encoded. In this solution, the N predicted texture coordinates of each vertex are obtained by means of predicting vertices from multiple encoded triangles, and the texture coordinates of the vertices are predicated based on the multiple encoded triangles, so as to improve the compression effects of UV coordinates data and improve the encoding efficiency of texture coordinates.

**BRIEF DESCRIPTION OF DRAWINGS**

FIG. 1 is a schematic flowchart of an encoding method according to an embodiment of this application;
FIG. 2 is a schematic diagram of searching for a target triangle according to an embodiment of this application;
FIG. 3 is a geometric diagram of a prediction principle according to an embodiment of this application;
FIG. 4 is a schematic diagram of a UV coordinate encoding framework according to an embodiment of this application;
FIG. 5 is a schematic flowchart of a decoding method according to an embodiment of this application;
FIG. 6 is a schematic diagram of a UV coordinate decoding framework according to an embodiment of this application;
FIG. 7 is a structural diagram of an encoding apparatus according to an embodiment of this application;
FIG. 8 is a structural diagram of a decoding apparatus according to an embodiment of this application;
FIG. 9 is a structural diagram of a communication device according to an embodiment of this application; and
FIG. 10 is a schematic diagram of a hardware structure of a terminal according to an embodiment of this application.

## DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application shall fall within the protection scope of this application.

The terms "first", "second", and the like in this specification and claims of this application are used to distinguish between similar objects rather than to describe a specific order or sequence. It should be understood that terms used in this way are interchangeable in appropriate circumstances so that the embodiments of this application can be implemented in other orders than the order illustrated or described herein. In addition, "first" and "second" are usually used to distinguish objects of a same type, and do not restrict a quantity of objects. For example, there may be one or a plurality of first objects. In addition, "and/or" in the specification and claims represents at least one of connected objects, and the character "/" generally indicates that the associated objects have an "or" relationship.

The following describes in detail the encoding and decoding method and apparatus, and the device provided in the embodiments of this application by using some embodiments and application scenarios thereof, with reference to the accompanying drawings.

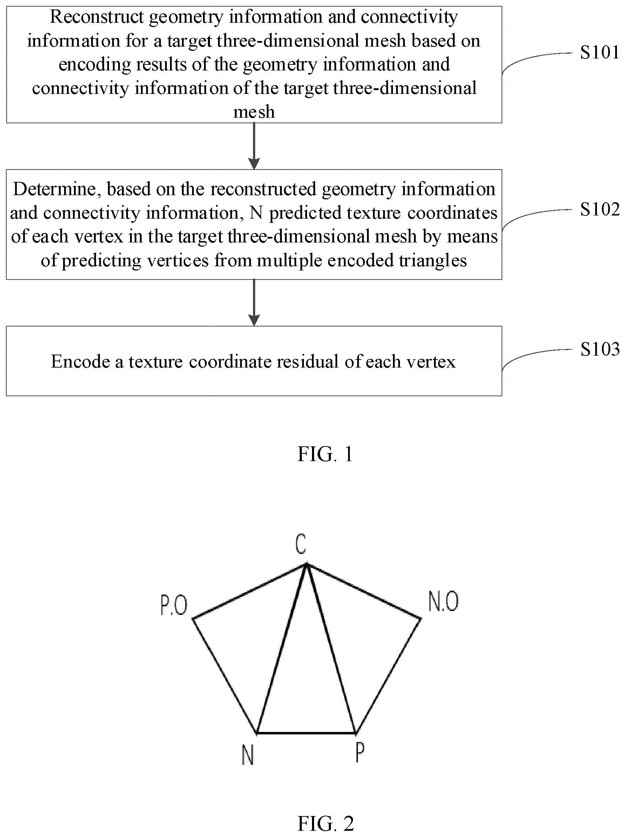

Referring to FIG. 1, FIG. 1 is a schematic flowchart of an encoding method according to an embodiment of this application. The encoding method provided in this embodiment includes the following steps.

S101. Reconstruct geometry information and connectivity information for a target three-dimensional mesh based on an encoding result of the geometry information and connectivity information of the target three-dimensional mesh.

It should be noted that: the target three-dimensional mesh mentioned in this application may be understood as a three-dimensional mesh corresponding to any video frame, the geometry information of the target three-dimensional mesh may be understood as the coordinates of a vertex in the three-dimensional mesh, usually three-dimensional coordinates, and the connectivity describes a connection, also referred to as connectivity information, between vertices, faces and other elements in a three-dimensional mesh.

It should be noted that in this step, the texture coordinates of vertices are encoded based on the geometry information and connectivity information. To ensure the encoded texture coordinates to be consistent with the encoded geometry information and connectivity information, the geometry information and connectivity information used in this embodiment of this application are reconstructed from the encoded geometry information and connectivity information.

S102. Determine, based on the reconstructed geometry information and connectivity information, N predicted texture coordinates of each vertex in the target three-dimensional mesh by means of predicting vertices from multiple encoded triangles.

It should be noted that the N predicted texture coordinates of each vertex are determined by means of predicting vertices from multiple encoded triangles, so as to improve the compression effects of UV coordinates data.

For specific implementations of determining the N predicted texture coordinates of each vertex by means of predicting vertices from multiple encoded triangles, refer to the subsequent embodiments.

S103. Encode a texture coordinate residual of each vertex.

In this step, the texture coordinate residual of any one vertex can be determined based on the N predicted texture coordinates of the vertex before being encoded. For specific implementations of encoding the texture coordinate residual of each vertex, refer to subsequent embodiments.

In an embodiment of this application, geometry information and connectivity information are reconstructed for a target three-dimensional mesh based on encoding results of the geometry information and connectivity information of the target three-dimensional mesh; N predicted texture coordinates of each vertex in the target three-dimensional mesh are determined based on the reconstructed geometry information and connectivity information by means of predicting vertices from multiple encoded triangles; and a texture coordinate residual of each vertex is encoded. In this solution, the N predicted texture coordinates of each vertex are obtained by means of predicting vertices from multiple encoded triangles, so as to improve the compression effects of UV coordinates data and improve the encoding efficiency of texture coordinates.

Optionally, the determining, based on the reconstructed geometry information and connectivity information, N predicted texture coordinates of each vertex in the target three-dimensional mesh by means of predicting vertices from multiple encoded triangles includes:

   selecting, on the encoder side, a first edge from an edge set, and determining a triangle corresponding to the first edge and a triangle with a to-be-encoded vertex as an opposite vertex and excluding the first edge to be target triangles; and obtaining, on the encoder side, predicted texture coordinates of the to-be-encoded vertex in the target triangle.

It should be noted that an initial edge set needs to be obtained before encoding. Specifically, the initial edge set is obtained as follows.

Before the selecting a first edge from an edge set, the method further includes:

selecting, on the encoder side, one initial triangle based on the reconstructed geometry information and connectivity information; and
encoding, on the encoder side, texture coordinates of three vertices of the initial triangle, and storing three edges of the initial triangle into the edge set.

It should be noted that in this embodiment of this application, vertices of the initial triangle are not predicted, but the texture coordinates are directly encoded. Optionally, for the initial triangle, in this embodiment of this application, texture coordinates of the first vertex of the initial triangle may be directly encoded, texture coordinates of the second vertex of the initial triangle are obtained by predicting edges based on the texture coordinates of the first vertex, and then texture coordinates of the third vertex of the initial triangle are obtained through similar triangle-based predictive encoding.

After the texture coordinates of all vertices of the initial triangle are encoded, all edges of the initial triangle are stored into an edge set to form an initial edge set, and then the rest of vertices are predicted based on the initial edge set.

For ease of understanding, an illustration is provided in FIG. 2. As shown in FIG. 2, FIG. 2 includes three triangles. A first triangle is formed by a vertex C, a vertex N, and a vertex P.O, a second triangle is formed by the vertex C, the vertex N, and a vertex P, and a third triangle is formed by the vertex C, the vertex P, and a vertex N.O, where the vertices N, P, P.O, and N.O are all uncoded vertices.

If the vertex C is a to-be-encoded vertex, vertices corresponding to the first edge are the vertex N and vertex P. In this case, the triangle corresponding to the first edge, namely, the second triangle, is determined as the target triangle. Further, a search is performed around the vertex C for triangles including the vertex C and other two encoded vertices but excluding the first edge. Such triangles are determined as the target triangles. To be specific, the first triangle and the second triangle are determined as the target triangles.

It should be understood that the vertices other than the to-be-encoded one of the target triangles are encoded vertices, and more than one target triangles is provided. Optionally, multiple target triangles are adjacent or not.

Optionally, the obtaining predicted texture coordinates of the to-be-encoded vertex in the target triangle includes:

obtaining, on the encoder side, texture coordinates of a projection point of the to-be-encoded vertex on the first edge based on geometry coordinates of vertices of the target triangle; and
obtaining, on the encoder side, the predicted texture coordinates of the to-be-encoded vertex based on the texture coordinates of the projection point.

In this embodiment, for any one target triangle, the texture coordinates of the projection point of the to-be-encoded vertex on the first edge can be obtained based on the geometry coordinates of the vertices of the target triangle, that is, geometry coordinates of the three vertices of the target triangle. For specific implementations, refer to subsequent embodiments.

After the texture coordinates of the projection point are obtained, the predicted texture coordinates of the to-be-encoded vertex are obtained based on the texture coordinates of the projection point. For specific implementations, refer to subsequent embodiments.

The following describes how to obtain texture coordinates of the projection point of the to-be-encoded vertex on the first edge based on the geometry coordinates of each vertex of the target triangle.

Optionally, the obtaining texture coordinates of a projection point of the to-be-encoded vertex on the first edge based on geometry coordinates of vertices of the target triangle includes:

obtaining, on the encoder side, the texture coordinates of the projection point of the to-be-encoded vertex on the first edge based on a sum of $\overrightarrow{NX}_{uv}$ and $N_{uv}$, or obtaining the texture coordinates of the projection point of the to-be-encoded vertex on the first edge based on a difference between $N_{uv}$ and $\overrightarrow{XN}_{uv}$; where
$N_{uv}$ represents texture coordinates of a vertex N on the first edge of the target triangle, $\overrightarrow{NX}_{uv}$ represents a vector from the vertex N on the first edge of the target triangle to texture coordinates of a projection point X of the to-be-encoded vertex on the first edge, and $\overrightarrow{XN}_{uv}$ represents a vector from the projection point X on the first edge to the texture coordinates of the vertex N on the first edge of the target triangle.

In this embodiment, the encoder side can obtain the texture coordinates of the projection point of the to-be-encoded vertex on the first edge by using a first formula. The first formula is $X_{uv} = \overrightarrow{NX}_{uv} + N_{uv}$, or $X_{uv} = N_{uv} - \overrightarrow{XN}_{uv}$, where $X_{uv}$ represents the texture coordinates of the projection point of the to-be-encoded vertex on the first edge, $N_{uv}$ represents the texture coordinates of the vertex N on the first edge of the target triangle, $\overrightarrow{NX}_{uv}$ represents the vector from the vertex N on the first edge of the target triangle to the texture coordinates of the projection point X of the to-be-encoded vertex on the

first edge, $\overrightarrow{XN}_{uv}$ represents the vector from the projection point X on the first edge to the texture coordinates of the vertex N on the first edge of the target triangle. $\overrightarrow{NX}_{uv} = (\overrightarrow{NP}_G \cdot \overrightarrow{NC}_G) \times \overrightarrow{NP}_{UV}/\overrightarrow{NP}_G^2$, where $\overrightarrow{NP}_G$ represents a vector from the vertex N on the first edge to geometry coordinates of the vertex P, $\overrightarrow{NC}_G$ represents a vector from the vertex N on the first edge to the geometry coordinates $C_G$ of the on the to-be-encoded vertex, $\overrightarrow{NP}_{UV}$ represents a vector from the vertex N on the first edge to the texture coordinates of the vertex P, and $\overrightarrow{NP}_G$ represents the vector from the vertex N on the first edge to geometry coordinates of the vertex P.

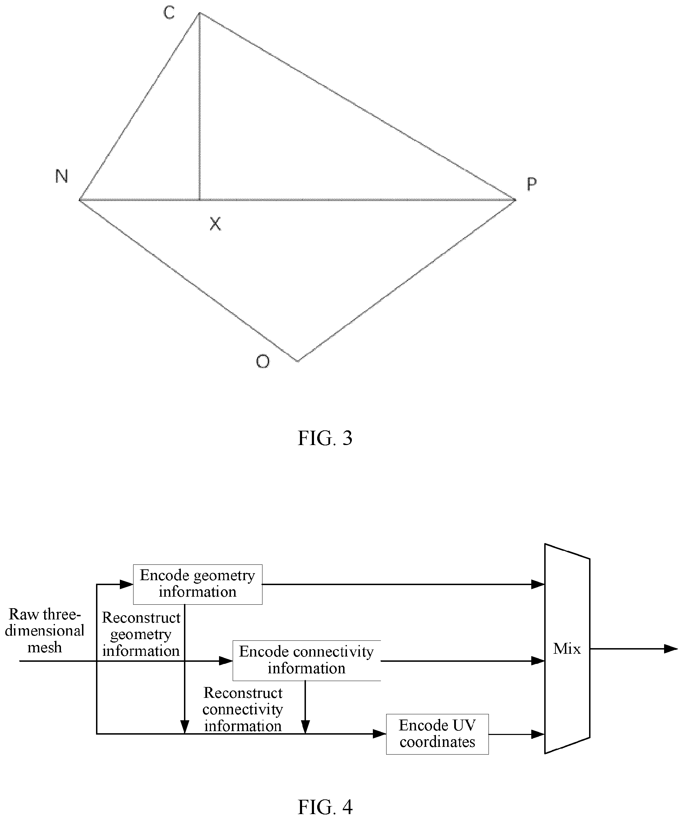

For ease of understanding, an illustration is provided in FIG. 3. As shown in FIG. 3, an edge NP is selected from the edge set, and can be regarded as the first edge. The vertex N and vertex P are two vertices of the first edge, the vertex C is the to-be-encoded vertex, and the vertex N, vertex P, and vertex C form the foregoing target triangle. A point X is a projection of the vertex C on the edge NP, the vertex O is an encoded vertex, and the triangle formed by the vertex O, vertex N, and vertex P share the edge NP with the triangle formed by the vertex N, vertex P, and vertex C. In this embodiment, the texture coordinates of the projection point of the to-be-encoded vertex on the first edge can be obtained using the first formula.

The following describes how to obtain predicted texture coordinates of the to-be-encoded vertex based on the texture coordinates of the projection point.

Optionally, the obtaining predicted texture coordinates of the to-be-encoded vertex based on the texture coordinates of the projection point includes:

in a case that a first vertex O corresponding to the first edge is an encoded vertex or a first triangle is not a degenerate triangle, obtaining, on the encoder side, texture coordinates of the to-be-encoded vertex based on $X_{uv}$ and $\overrightarrow{XC}_{uv}$; where the first triangle and the target triangle share the first edge, and an opposite vertex of the first edge in the first triangle is the first vertex O; where

$X_{uv}$ represents texture coordinates of a projection point X of the to-be-encoded vertex on the first edge, and $\overrightarrow{XC}_{uv}$ represents a vector from the projection point X of the to-be-encoded vertex on the first edge to the texture coordinates $C_{uv}$ of the to-be-encoded vertex.

In this embodiment, the texture coordinates of the to-be-encoded vertex can be obtained using a second formula.

The second formula is $Pred_{C\_NP} = \begin{cases} X_{uv} + \overrightarrow{XC}_{uv}, |distance_1| > |distance_2| \\ X_{uv} - \overrightarrow{XC}_{uv}, |distance_1| < |distance_2| \end{cases}$ ; where

$Pred_{C\_NP}$ represents the predicted texture coordinates of the to-be-encoded vertex, $X_{uv}$ represents the texture coordinates of the projection point X of the to-be-encoded vertex on the first edge, $\overrightarrow{XC}_{uv}$ represents the vector from the projection point X of the to-be-encoded vertex on the first edge to the texture coordinates $C_{uv}$ of the to-be-encoded vertex, $distance_1 = O_{uv} - (X_{uv} + \overrightarrow{XC}_{uv})$, where $O_{uv}$ represents the texture coordinates of the first vertex corresponding to the first edge of the target triangle and $\overrightarrow{XC}_{uv}$ represents the vector from the projection point X of the to-be-encoded vertex on the first edge to the texture coordinates $C_{uv}$ of the to-be-encoded vertex, and $distance_2 = O_{uv} - (X_{uv} - \overrightarrow{XC}_{uv})$.

In this embodiment, referring to FIG. 3, in a case that the first vertex O is an encoded vertex or the first triangle is not a degenerate triangle, the predicted texture coordinates of the to-be-encoded vertex can be obtained based on the texture coordinates of the first vertex O by using the second formula.

It should be understood that the first triangle is a triangle formed by the vertex N, vertex P, and vertex O shown in FIG. 3. In a case that the vertex O is located on the first edge formed by the vertex N and vertex P, an area of the first triangle is 0, meaning that the first triangle is a degenerate triangle.

Optionally, the obtaining, on the encoder side, predicted texture coordinates of the to-be-encoded vertex based on the texture coordinates of the projection point includes:

in a case that a first vertex O corresponding to the first edge is an uncoded vertex or a first triangle is a degenerate triangle, obtaining, on the encoder side, texture coordinates of the to-be-encoded vertex based on $X_{uv}$ and $\overrightarrow{XC}_{uv}$, and encoding a target identifier of the to-be-encoded vertex; where the first triangle and the target triangle share the first edge, and an opposite vertex of the first edge in the first triangle is the first vertex O; where

$X_{uv}$ represents texture coordinates of a projection point X of the to-be-encoded vertex on the first edge, and $\overrightarrow{XC}_{uv}$ represents a vector from the projection point X of the to-be-encoded vertex on the first edge to the texture coordinates $C_{uv}$ of the to-be-encoded vertex.

In this embodiment, a third formula can be used to obtain the texture coordinates of the to-be-encoded vertex and encode the target identifier of the to-be-encoded vertex.

$$\text{Pred}_{C\_NP} = \begin{cases} X_{uv} + \overrightarrow{\mathbf{XC}}_{uv}, |distance_3| > |distance_4| \\ X_{uv} - \overrightarrow{\mathbf{XC}}_{uv}, |distance_3| < |distance_4| \end{cases} ; \text{ where}$$

The third formula is $\text{Pred}_{C\_NP}$ represents the predicted texture coordinates of the to-be-encoded vertex, $X_{uv}$ represents the texture coordinates of the projection point X of the to-be-encoded vertex on the first edge, $\overrightarrow{\mathbf{XC}}_{uv}$ represents the vector from the projection point X of the to-be-encoded vertex on the first edge to the texture coordinates $C_{uv}$ of the to-be-encoded vertex, $distance_3 = C_{uv} - (X_{uv} + \overrightarrow{\mathbf{XC}}_{uv})$, where $C_{uv}$ represents the texture coordinates of the to-be-encoded vertex and $\overrightarrow{\mathbf{XC}}_{uv}$ represents the vector from the projection point X of the to-be-encoded vertex on the first edge to the texture coordinates $C_{uv}$ of the to-be-encoded vertex, and $distance_4 = C_{uv} - (X_{uv} - \overrightarrow{\mathbf{XC}}_{uv})$. The target identifier is used to indicate which one of $|distance_3|$ and $|distance_4|$ is greater.

In this embodiment, referring to FIG. 3, in a case that the first vertex O is an uncoded vertex or the first triangle is a degenerate triangle, the predicted texture coordinates of the to-be-encoded vertex can be obtained using the third formula.

It should be understood that the target identifier is used to indicate which one of $|distance_3|$ and $|distance_4|$ is greater. For example, the target identifier is set to 0, meaning $\text{Pred}_{C\_NP} = X_{uv} + \overrightarrow{\mathbf{XC}}_{uv}$; and the target identifier is set to 1, meaning $\text{Pred}_{C\_NP} = X_{uv} - \overrightarrow{\mathbf{XC}}_{uv}$,

Optionally, in the first formula, second formula, and third formula, the vertex N can be replaced with the vertex P for calculations.

For example, the texture coordinates of the vertex N are replaced with the texture coordinates of the vertex P.

For example, $\overrightarrow{\mathbf{NX}}_{uv}$ in the first formula is replaced with $\overrightarrow{\mathbf{PX}}_{uv}$, where $\overrightarrow{\mathbf{PX}}_{uv}$ represents a vector from the vertex P on the first edge of the target triangle to the texture coordinates of the projection point X of the to-be-encoded vertex on the first edge.

Optionally, before the selecting a first edge from an edge set, the method further includes:

selecting, on the encoder side, one initial triangle based on the reconstructed geometry information and connectivity information; and
encoding, on the encoder side, texture coordinates of three vertices of the initial triangle, and storing three edges of the initial triangle into the edge set.

Optionally, after the obtaining predicted texture coordinates of the to-be-encoded vertex in the target triangle, the method further includes:
storing, on the encoder side, a second edge of the target triangle into the edge set and removing the first edge from the edge set, where the second edge is an edge of the target triangle not contained in the edge set.

Optionally, the encoding texture coordinate residual of each vertex includes:

determining, on the encoder side, target values corresponding to the N predicted texture coordinates of any one vertex as target texture coordinates of the vertex; and
encoding, on the encoder side, the texture coordinate residual of the vertex, where the residual is determined based on real texture coordinates of the vertex and the target texture coordinates of the vertex.

In this embodiment, the N predicted texture coordinates can be weighted and summed, and a target value obtained therefrom is determined as the target texture coordinates of the vertex. In a case that the predicted texture coordinates have the same weight, an average value of the N predicted texture coordinates is determined as the target texture coordinates of the vertex. It should be understood that in other embodiments, the target value may not be obtained from the weighted sum of the N predicted texture coordinates, but may be obtained through other operations, which is not specifically limited herein.

For ease of understanding, an illustration is provided in FIG. 3. As shown in FIG. 3, there are three target triangles, and the to-be-encoded vertex corresponds to three predicted texture coordinates, that is, $\text{Pred}_{C\_NP}$, $\text{Pred}_{C\_PON}$, and $\text{Pred}_{C\_PNO}$. $\text{Pred}_{C\_NP}$ represents the predicted texture coordinates of the to-be-encoded vertex in the second triangle, $\text{Pred}_{C\_PON}$ represents the predicted texture coordinates of the to-be-encoded vertex in the first triangle, and $\text{Pred}_{C\_PNO}$ represents the predicted texture coordinates of the to-be-encoded vertex in the third triangle.

Optionally, an average value of $\text{Pred}_{C\_NP}$, $\text{Pred}_{C\_PON}$, and $\text{Pred}_{C\_PNO}$ is determined as the target texture coordinates of the to-be-encoded vertex. Then, a residual of the to-be-encoded vertex can be obtained based on the target texture coordinates and the real texture coordinates. The to-be-encoded vertex can be encoded by encoding the residual, so that less bits are used for encoding texture coordinates.

To sum up, the specific implementation of encoding texture coordinates (hereinafter referred to as UV coordinates) in this embodiment of this application is as follows.

Step S1. Select one initial triangle based on a connectivity information, directly encode UV coordinates of three vertices of the initial triangle, and store three edges of the initial triangle into an edge set.

Step S2. Select an edge τ from the set according to access rules, and encode the UV coordinates of a to-be-encoded vertex in a new triangle including τ. According to rules of mapping from a three-dimensional triangle to a two-dimensional triangle and the foregoing process of calculating the predicted UV coordinates, a search is performed around the to-be-encoded vertex for target triangles that share the to-be-encoded vertex with the to-be-encoded triangle and have two encoded vertices, so as to obtain a predicted value of the to-be-encoded vertex (namely, the predicted texture coordinates). Then, the residual is obtained by subtracting an original UV coordinate value (namely, the real texture coordinates) by the predicted value. In a case that the first vertex O is an encoded vertex or the target triangle is not a degenerate triangle, the target identifier of the to-be-encoded vertex does not need to be encoded; or in a case that the first vertex O is an uncoded vertex or the target triangle is a degenerate triangle, the target identifier of the to-be-encoded vertex needs to be encoded.

Step S3. Add two edges of the new triangle into the edge set, remove the edge τ at the top of the edge set, select a next edge, encode predicted UV coordinates of an opposite vertex of the triangle adjacent to this edge to obtain a residual, and then repeat step S3 until the residuals for all vertices are obtained.

Step S4. Perform entropy coding on the UV coordinate residuals and output UV coordinate bitstream.

FIG. 4 shows a UV coordinate encoding framework according to an embodiment of this application. The overall encoding process is as follows.

In a case that the geometry information and connectivity information of a three-dimensional mesh are encoded, the UV coordinates can be encoded based on reconstructed geometry information and connectivity information. First, a triangle is selected as the initial triangle and coordinate values are directly encoded. Second, a triangle adjacent to the initial triangle is selected as the triangle to be encoded, and a search is performed around the to-be-encoded vertex in the triangle to be encoded for a target triangle that share the to-be-encoded vertex with the triangle to be encoded and have two encoded vertices. The UV coordinate value of an uncoded vertex in a triangle adjacent to the initial edge is predicted based on the relationship between the encoded UV coordinates of the target triangle and texture projections, a difference between the real UV coordinates and predicted coordinates of the to-be-encoded vertex is encoded, and a new edge is selected from the newly encoded triangle for encoding uncoded vertices of an adjacent triangle. This process is iterated until the UV coordinates of the entire three-dimensional mesh are encoded.

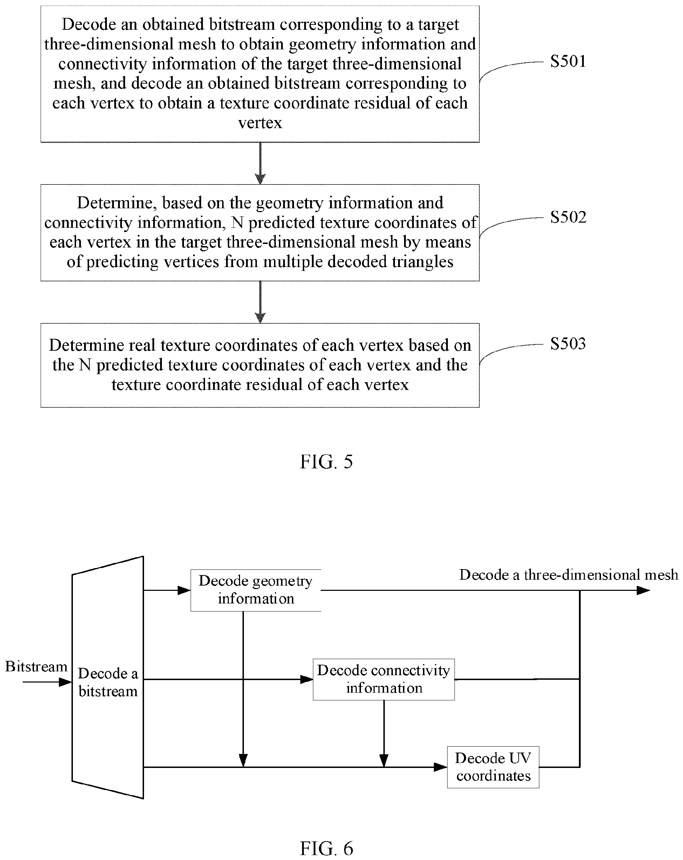

Referring to FIG. 5, FIG. 5 is a schematic flowchart of a decoding method according to an embodiment of this application. The decoding method provided in this embodiment includes the following steps.

S501. Decode an obtained bitstream corresponding to a target three-dimensional mesh to obtain geometry information and connectivity information of the target three-dimensional mesh, and decode an obtained bitstream corresponding to each vertex to obtain a texture coordinate residual of each vertex.

S502. Determine, based on the geometry information and connectivity information, N predicted texture coordinates of each vertex in the target three-dimensional mesh by means of predicting vertices from multiple decoded triangles.

S503. Determine real texture coordinates of each vertex based on the N predicted texture coordinates of each vertex and the texture coordinate residual of each vertex.

Optionally, the determining, based on the geometry information and connectivity information, N predicted texture coordinates of each vertex in the target three-dimensional mesh by means of predicting vertices from multiple decoded triangles includes:

selecting, on the decoder side, a first edge from an edge set, and determining a triangle corresponding to the first edge and a triangle with a to-be-decoded vertex as an opposite vertex and excluding the first edge to be target triangles; where vertices in the target triangles other than the to-be-decoded vertex are decoded vertices and an opposite vertex of the first edge in the triangle corresponding to the first edge is the to-be-encoded vertex; and

obtaining, on the decoder side, predicted texture coordinates of the to-be-decoded vertex in the target triangle.

Optionally, the obtaining predicted texture coordinates of the to-be- decoded vertex in the target triangle includes:

obtaining, on the decoder side, texture coordinates of a projection point of the to-be-decoded vertex on the first edge based on geometry coordinates of vertices of the target triangle; and

obtaining, on the decoder side, the predicted texture coordinates of the to-be-decoded vertex based on the texture coordinates of the projection point.

Optionally, the obtaining texture coordinates of a projection point of the to-be-decoded vertex on the first edge based on geometry coordinates of vertices of the target triangle includes:

obtaining, on the decoder side, the texture coordinates of the projection point of the to-be-encoded vertex on the first edge based on a sum of $\overrightarrow{NX}_{uv}$ and $N_{uv}$, or obtaining the texture coordinates of the projection point of the to-be-encoded vertex on the first edge based on a difference between $N_{uv}$ and $\overrightarrow{XN}_{uv}$; where
$N_{uv}$ represents texture coordinates of a vertex N on the first edge of the target triangle, $\overrightarrow{NX}_{uv}$ represents a vector from the vertex N on the first edge of the target triangle to texture coordinates of a projection point X of the to-be-decoded vertex on the first edge, and $\overrightarrow{XN}_{uv}$ represents a vector from the projection point X on the first edge to the texture coordinates of the vertex N on the first edge of the target triangle.

In this embodiment, the decoder side can obtain the texture coordinates of the projection point of the to-be-decoded vertex on the first edge using a first formula.

The first formula is $X_{uv} = \overrightarrow{NX}_{uv} + N_{uv}$, or $X_{uv} = N_{uv} - \overrightarrow{XN}_{uv}$, where $X_{uv}$ represents the texture coordinates of the projection point of the to-be-encoded vertex on the first edge, $N_{uv}$ represents the texture coordinates of the vertex N on the first edge of the target triangle, $\overrightarrow{NX}_{uv}$ represents the vector from the vertex N on the first edge of the target triangle to the texture coordinates of the projection point X of the to-be-encoded vertex on the first edge, $\overrightarrow{XN}_{uv}$ represents the vector from the projection point X on the first edge to the texture coordinates of the vertex N on the first edge of the target triangle. $\overrightarrow{NX}_{uv} = (\overrightarrow{NP}_G \cdot \overrightarrow{NC}_G) \times \overrightarrow{NP}_{UV} / \overrightarrow{NP}_G{}^2$, where $\overrightarrow{NP}_G$ represents a vector from the vertex N on the first edge to geometry coordinates of the vertex P, $\overrightarrow{NC}_G$ represents a vector from the vertex N on the first edge to the geometry coordinates $C_G$ of the on the to-be-encoded vertex, $\overrightarrow{NP}_{UV}$ represents a vector from the vertex N on the first edge to the texture coordinates of the vertex P, and $\overrightarrow{NP}_G$ represents the vector from the vertex N on the first edge to geometry coordinates of the vertex P.

Optionally, the obtaining predicted texture coordinates of the to-be-decoded vertex based on the texture coordinates of the projection point includes:

in a case that a first vertex O corresponding to the first edge is a decoded vertex or a first triangle is not a degenerate triangle, obtaining, on the decoder side, texture coordinates of the to-be-decoded vertex based on $X_{uv}$ and $\overrightarrow{XC}_{uv}$; where the first triangle and the target triangle share the first edge, and an opposite vertex of the first edge in the first triangle is the first vertex O; where
$X_{uv}$ represents texture coordinates of a projection point X of the to-be-encoded vertex on the first edge, and $\overrightarrow{XC}_{uv}$ represents a vector from the projection point X of the to-be-encoded vertex on the first edge to the texture coordinates $C_{uv}$ of the to-be-encoded vertex.

In this embodiment, the decoder side can obtain the texture coordinates of the to-be-decoded vertex by using a second formula.

$$\begin{cases} X_{uv} + \overrightarrow{\mathbf{XC}}_{uv}, |\text{distance}_1| > |\text{distance}_2| \\ X_{uv} - \overrightarrow{\mathbf{XC}}_{uv}, |\text{distance}_1| < |\text{distance}_2| \end{cases}$$

The second formula is $\text{Pred}_{C\_NP} = $ ; where
$\text{Pred}_{C\_NP}$ represents the predicted texture coordinates of the to-be-encoded vertex, $X_{uv}$ represents the texture coordinates of the projection point X of the to-be-encoded vertex on the first edge, $\overrightarrow{XC}_{uv}$ represents the vector from the projection point X of the to-be-encoded vertex on the first edge to the texture coordinates $C_{uv}$ of the to-be-encoded vertex, $\text{distance}_1 = O_{uv} - (X_{uv} + \overrightarrow{XC}_{uv})$, where $O_{uv}$ represents the texture coordinates of the first vertex corresponding to the first edge of the target triangle and $\overrightarrow{XC}_{uv}$ represents the vector from the projection point X of the to-be-encoded vertex on the first edge to the texture coordinates $C_{uv}$ of the to-be-encoded vertex, and $\text{distance}_2 = O_{uv} - (X_{uv} - \overrightarrow{XC}_{uv})$.

Optionally, the obtaining predicted texture coordinates of the to-be-decoded vertex based on the texture coordinates of the projection point includes:

in a case that a first vertex O corresponding to the first edge is an undecoded vertex or a first triangle is a degenerate triangle, determining, on the decoder side, texture coordinates of the to-be-decoded vertex based on a retrieved target identifier of the to-be-decoded vertex, $X_{uv}$, and $\overrightarrow{XC}_{uv}$; where the first triangle and the target triangle share the first edge, and an opposite vertex of the first edge in the first triangle is the first vertex O; where
$X_{uv}$ represents texture coordinates of a projection point X of the to-be-encoded vertex on the first edge, and $\overrightarrow{XC}_{uv}$ represents a vector from the projection point X of the to-be-encoded vertex on the first edge to the texture coordinates $C_{uv}$ of the to-be-encoded vertex.

In this embodiment, the decoder side can determine the texture coordinates of the to-be-decoded vertex based on the retrieved target identifier of the to-be-decoded vertex and a third formula.

$$\text{Pred}_{C\_NP} = \begin{cases} X_{uv} + \overrightarrow{\mathbf{XC}}_{uv}, |\text{distance}_3| > |\text{distance}_4| \\ X_{uv} - \overrightarrow{\mathbf{XC}}_{uv}, |\text{distance}_3| < |\text{distance}_4| \end{cases}$$

The third formula is ; where

$Pred_{C\_NP}$ represents the predicted texture coordinates of the to-be-encoded vertex, $X_{uv}$ represents the texture coordinates of the projection point X of the to-be-encoded vertex on the first edge, $\overrightarrow{XC}_{uv}$ represents the vector from the projection point X of the to-be-encoded vertex on the first edge to the texture coordinates $C_{uv}$ of the to-be-encoded vertex, $distance_3 = C_{uv} - (X_{uv} + \overrightarrow{XC}_{uv})$, where $C_{uv}$ represents the texture coordinates of the to-be-encoded vertex and $\overrightarrow{XC}_{uv}$ represents the vector from the projection point X of the to-be-encoded vertex on the first edge to the texture coordinates $C_{uv}$ of the to-be-encoded vertex, and $distance_4 = C_{uv} - (X_{uv} - \overrightarrow{XC}_{uv})$. The target identifier is used to indicate which one of $|distance_3|$ and $|distance_4|$ is greater.

Optionally, before the selecting a first edge from an edge set, the method further includes:

selecting, on the decoder side, one initial triangle based on the geometry information and connectivity information; and
decoding, on the decoder side, texture coordinates of three vertices of the initial triangle, and storing three edges of the initial triangle into the edge set.

Optionally, after the obtaining predicted texture coordinates of the to-be-decoded vertex in the target triangle, the method further includes:
storing, on the decoder side, a second edge of the target triangle into the edge set and removing the first edge from the edge set, where the second edge is an edge of the target triangle not contained in the edge set.

Optionally, the determining real texture coordinates of each vertex based on the N predicted texture coordinates of each vertex and the texture coordinate residual of each vertex includes:

determining, on the decoder side, target values corresponding to the N predicted texture coordinates of any one vertex as target texture coordinates of the vertex; and
performing, on the decoder side, an addition operation on the target texture coordinates of the vertex and the texture coordinate residual of the vertex to determine the real texture coordinates of the vertex.

It should be noted that this embodiment of this application describes a reverse process of encoding. As shown in the decoding block diagram FIG. 6, the decoding process of UV coordinates is as follows: geometry information and connectivity information are decoded, a bitstream is decoded based on the geometry information and connectivity information to obtain a residual, predicted UV coordinates are obtained, and then real UV coordinates are obtained based on the residual and the predicted UV coordinates. Finally, the UV coordinates are decoded. The method of predicting UV coordinates can be found in the description of the encoder side, and will not be repeated herein.

To sum up, the specific implementation of decoding UV coordinates in this embodiment of this application is as follows.

Step SP1. Perform entropy decoding on UV coordinate bitstream, which contains a UV coordinate residual and a target identifier.

Step SP2. Decode UV coordinates of three vertices of an initial triangle, where predicted values are not calculated and UV coordinates, instead of a residual, of the initial triangle are encoded, and store three edges of the initial triangle into an edge set.

Step SP3. Select an edge $\tau$ from the edge set according to access rules, and decode the UV coordinates of an opposite vertex of a new triangle including the edge $\tau$. Based on the mapping from a three-dimensional triangle to a two-dimensional triangle and multiple decoded triangles, a predicted UV coordinate value of the to-be-decoded vertex is calculated using the calculation method adopted at the encoder side. Then, the predicted value and the residual of entropy decoding are added to obtain the reconstructed UV coordinates. If the encoder side has generated a target identifier, the target identifier is used to calculate the predicted UV coordinate value of the to-be-decoded vertex.

Step SP4. Add two edges of the new triangle into the edge set, remove the edge $\tau$ at the top of the edge set, select a next edge, decode UV coordinates of an opposite vertex of the triangle adjacent to this edge, and then repeat step SP3 until the residuals of all vertices are obtained.

It should be noted that this embodiment of this application is a method embodiment reverse to the embodiment of the encoding method. Since decoding is a reverse process of encoding, all implementations at the encoder side are applicable to the embodiments of the decoder side, with the same technical effects achieved. Details are not described herein again.

The encoding method provided in this embodiment of this application may be executed by an encoding apparatus. In the embodiments of this application, the encoding apparatus according to an embodiment of this application is described assuming that the encoding method is executed by an encoding apparatus.

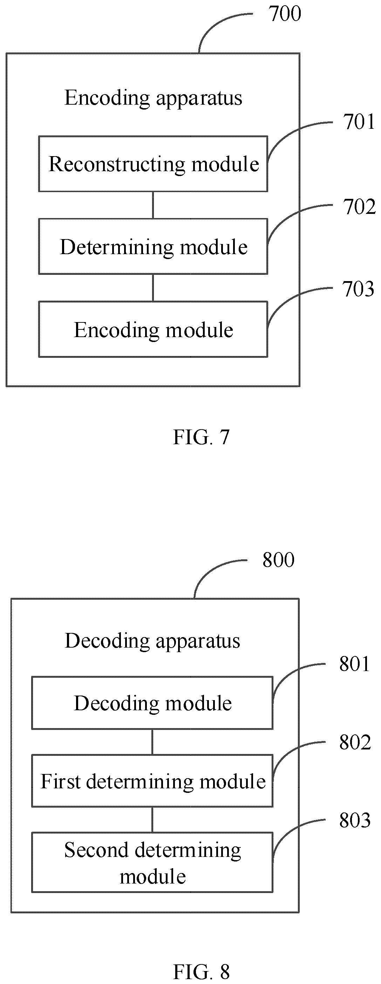

As shown in FIG. 7, an embodiment of this application further provides an encoding apparatus 700, including:

a reconstructing module 701, configured to reconstruct geometry information and connectivity information for a target three-dimensional mesh based on an encoding result of the geometry information and connectivity information of the target three-dimensional mesh;

a determining module 702, configured to determine, based on the reconstructed geometry information and connectivity information, N predicted texture coordinates of each vertex in the target three-dimensional mesh by means of predicting vertices from multiple encoded triangles, where N is a positive integer greater than 1; and

an encoding module 703, configured to encode a texture coordinate residual of each vertex; where the texture coordinate residual of the vertex is determined based on the N predicted texture coordinates of the vertex.

Optionally, the determining module 702 is specifically configured to:

select a first edge from an edge set, and determine a triangle corresponding to the first edge and a triangle with a to-be-encoded vertex as an opposite vertex and excluding the first edge to be target triangles; where vertices in the target triangles other than the to-be-encoded vertex are encoded vertices and an opposite vertex of the first edge in the triangle corresponding to the first edge is the to-be-encoded vertex; and

obtain predicted texture coordinates of the to-be-encoded vertex in the target triangle.

Optionally, the determining module 702 is further specifically configured to:

obtain texture coordinates of a projection point of the to-be-encoded vertex on the first edge based on geometry coordinates of vertices of the target triangle; and

obtain the predicted texture coordinates of the to-be-encoded vertex based on the texture coordinates of the projection point.

Optionally, the determining module 702 is further specifically configured to:

obtain the texture coordinates of the projection point of the to-be-encoded vertex on the first edge based on a sum of $\overrightarrow{NX}_{uv}$ and $N_{uv}$, or obtain the texture coordinates of the projection point of the to-be-encoded vertex on the first edge based on a difference between $N_{uv}$ and $\overrightarrow{XN}_{uv}$; where

$N_{uv}$ represents texture coordinates of a vertex N on the first edge of the target triangle, $\overrightarrow{NX}_{uv}$ represents a vector from the vertex N on the first edge of the target triangle to texture coordinates of a projection point X of the to-be-encoded vertex on the first edge, and $\overrightarrow{XN}_{uv}$ represents a vector from the projection point X on the first edge to the texture coordinates of the vertex N on the first edge of the target triangle.

Optionally, the determining module 702 is further specifically configured to:

in a case that a first vertex O corresponding to the first edge is an encoded vertex or a first triangle is not a degenerate triangle, obtain texture coordinates of the to-be-encoded vertex based on $X_{uv}$ and $\overrightarrow{XC}_{uv}$; where the first triangle and the target triangle share the first edge, and an opposite vertex of the first edge in the first triangle is the first vertex O; where $X_{uv}$ represents texture coordinates of a projection point X of the to-be-encoded vertex on the first edge, and $\overrightarrow{XC}_{uv}$ represents a vector from the projection point X of the to-be-encoded vertex on the first edge to the texture coordinates $C_{uv}$ of the to-be-encoded vertex.

Optionally, the determining module 702 is further specifically configured to:

in a case that a first vertex O corresponding to the first edge is an uncoded vertex or a first triangle is a degenerate triangle, obtain texture coordinates of the to-be-encoded vertex based on $X_{uv}$ and $\overrightarrow{XC}_{uv}$, and encode a target identifier of the to-be-encoded vertex; where the first triangle and the target triangle share the first edge, and an opposite vertex of the first edge in the first triangle is the first vertex O; where $X_{uv}$ represents texture coordinates of a projection point X of the to-be-encoded vertex on the first edge, and $\overrightarrow{XC}_{uv}$ represents a vector from the projection point X of the to-be-encoded vertex on the first edge to the texture coordinates $C_{uv}$ of the to-be-encoded vertex.

Optionally, the determining module 702 is further specifically configured to:

select one initial triangle based on the reconstructed geometry information and connectivity information; and

encode texture coordinates of three vertices of the initial triangle, and store three edges of the initial triangle into the edge set.

Optionally, the determining module 702 is further specifically configured to:

store a second edge of the target triangle into the edge set and remove the first edge from the edge set, where the second edge is an edge of the target triangle not contained in the edge set.

Optionally, the encoding module 703 is specifically configured to:

determine target values corresponding to the N predicted texture coordinates of any one vertex as target texture coordinates of the vertex; and

encode the texture coordinate residual of the vertex, where the residual is determined based on real texture coordinates of the vertex and the target texture coordinates of the vertex.

In an embodiment of this application, geometry information and connectivity information are reconstructed for a target three-dimensional mesh based on encoding results of the geometry information and connectivity information of the target three-dimensional mesh; N predicted texture coordinates of each vertex in the target three-dimensional mesh are determined based on the reconstructed geometry information and connectivity information by means of predicting vertices from multiple encoded triangles; and a texture coordinate residual of each vertex is encoded. In this solution, the N predicted texture coordinates of each vertex are obtained by means of predicting vertices from multiple encoded triangles, so as to improve the compression effects of UV coordinates data and improve the encoding efficiency of texture coordinates.

This apparatus embodiment corresponds to the encoding method embodiment illustrated in FIG. 1. All processes and implementations in the foregoing method embodiments of the encoder side are applicable to this apparatus embodiment, with the same technical effects achieved.

The decoding method provided in this embodiment of this application may be executed by a decoding apparatus. In the embodiments of this application, the decoding apparatus provided in the embodiments of this application is described by using the decoding method being executed by the decoding apparatus as an example.

As shown in FIG. 8, an embodiment of this application further provides a decoding apparatus 800, including:

a decoding module 801, configured to: decode an obtained bitstream corresponding to a target three-dimensional mesh to obtain geometry information and connectivity information of the target three-dimensional mesh, and decode an obtained bitstream corresponding to each vertex to obtain a texture coordinate residual of each vertex;

a first determining module 802, configured to determine, based on the geometry information and connectivity information, N predicted texture coordinates of each vertex in the target three-dimensional mesh by means of predicting vertices from multiple decoded triangles, where N is a positive integer greater than 1; and

a second determining module 803, configured to determine real texture coordinates of each vertex based on the N predicted texture coordinates of each vertex and the texture coordinate residual of each vertex.

Optionally, the first determining module 802 is specifically configured to:

select a first edge from an edge set, and determine a triangle corresponding to the first edge and a triangle with a to-be-decoded vertex as an opposite vertex and excluding the first edge to be target triangles; where vertices in the target triangles other than the to-be-decoded vertex are decoded vertices and an opposite vertex of the first edge in the triangle corresponding to the first edge is the to-be-encoded vertex; and

obtain predicted texture coordinates of the to-be-decoded vertex in the target triangle.

Optionally, the first determining module 802 is further specifically configured to:

obtain texture coordinates of a projection point of the to-be-decoded vertex on the first edge based on geometry coordinates of vertices of the target triangle; and

obtain the predicted texture coordinates of the to-be-decoded vertex based on the texture coordinates of the projection point.

Optionally, the first determining module 802 is further specifically configured to:

obtain the texture coordinates of the projection point of the to-be-encoded vertex on the first edge based on a sum of $\overrightarrow{NX}_{uv}$ and $N_{uv}$, or obtain the texture coordinates of the projection point of the to-be-encoded vertex on the first edge based on a difference between $N_{uv}$ and $\overrightarrow{XN}_{uv}$; where

$N_{uv}$ represents texture coordinates of a vertex N on the first edge of the target triangle, $\overrightarrow{NX}_{uv}$ represents a vector from the vertex N on the first edge of the target triangle to texture coordinates of a projection point X of the to-be-decoded vertex on the first edge, and $\overrightarrow{XN}_{uv}$ represents a vector from the projection point X on the first edge to the texture coordinates of the vertex N on the first edge of the target triangle.

Optionally, the first determining module 802 is further specifically configured to:

in a case that a first vertex O corresponding to the first edge is a decoded vertex or a first triangle is not a degenerate triangle, obtain texture coordinates of the to-be-decoded vertex based on $X_{uv}$ and $\overrightarrow{XC}_{uv}$; where the first triangle and the target triangle share the first edge, and an opposite vertex of the first edge in the first triangle is the first vertex O; where $X_{uv}$ represents texture coordinates of a projection point X of the to-be-encoded vertex on the first edge, and $\overrightarrow{XC}_{uv}$ represents a vector from the projection point X of the to-be-encoded vertex on the first edge to the texture coordinates $C_{uv}$ of the to-be-encoded vertex.

Optionally, the first determining module 802 is further specifically configured to:

in a case that a first vertex O corresponding to the first edge is an undecoded vertex or a first triangle is a degenerate triangle, determine texture coordinates of the to-be-decoded vertex based on a retrieved target identifier of the to-be-decoded vertex, $X_{uv}$, and $\overrightarrow{XC}_{uv}$; where the first triangle and the target triangle share the first edge, and an opposite vertex of the first edge in the first triangle is the first vertex O; where
$X_{uv}$ represents texture coordinates of a projection point X of the to-be-encoded vertex on the first edge, and $\overrightarrow{XC}_{uv}$ represents a vector from the projection point X of the to-be-encoded vertex on the first edge to the texture coordinates $C_{uv}$ of the to-be-encoded vertex.

Optionally, the first determining module 802 is further specifically configured to:

select one initial triangle based on the geometry information and connectivity information; and
decode texture coordinates of three vertices of the initial triangle, and store three edges of the initial triangle into the edge set.

Optionally, the first determining module 802 is further specifically configured to:
store a second edge of the target triangle into the edge set and remove the first edge from the edge set, where the second edge is an edge of the target triangle not contained in the edge set.
Optionally, the second determining module 803 is further specifically configured to:

determine target values corresponding to the N predicted texture coordinates of any one vertex as target texture coordinates of the vertex; and
perform an addition operation on the target texture coordinates of the vertex and the texture coordinate residual of the vertex to determine the real texture coordinates of the vertex.

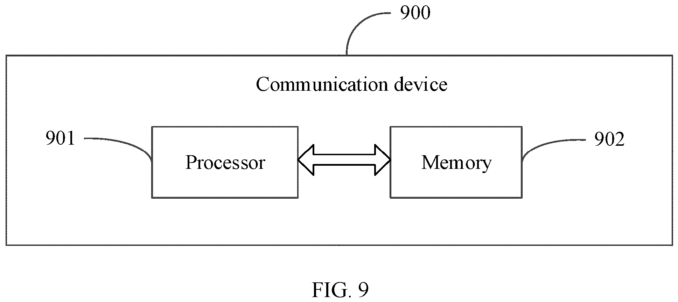

The decoding apparatus provided in this embodiment of this application can implement the processes implemented by the method embodiment illustrated in FIG. 5, with the same technical effects achieved. To avoid repetition, details are not described herein again.
The encoding apparatus and decoding apparatus according to embodiments of this application may be an electronic device, for example, an electronic device with an operating system, or may be a component in an electronic device, for example, an integrated circuit or a chip. The electronic device may be a terminal or another device than the terminal. For example, the terminal may include but is not limited to a type of the foregoing terminal, and another device may be a server, a network attached storage (Network Attached Storage, NAS), or the like, which is not specifically limited in the embodiments of this application.
Optionally, as shown in FIG. 9, an embodiment of this application further provides a communication device 900, which includes a processor 901 and a memory 902, and a program or instruction are stored on the memory 902 and capable of running on the processor 901. For example, in a case that the communication device 900 is a terminal, when the program or instructions are executed by the processor 901, the steps in the foregoing embodiments of the encoding method are implemented, with the same technical effects achieved, or the steps in the foregoing embodiments of the decoding method are implemented, with the same technical effects achieved.
An embodiment of this application further provides a terminal, including a processor 901 and a communication interface. The processor 901 is configured to perform the following operations:

reconstructing geometry information and connectivity information for a target three-dimensional mesh based on an encoding result of the geometry information and connectivity information of the target three-dimensional mesh;
determining, based on the reconstructed geometry information and connectivity information, N predicted texture coordinates of each vertex in the target three-dimensional mesh by means of predicting vertices from multiple encoded triangles; and

encoding a texture coordinate residual of each vertex.

Alternatively, the processor 901 is configured to perform the following operations:

decoding an obtained bitstream corresponding to a target three-dimensional mesh to obtain geometry information and connectivity information of the target three-dimensional mesh, and decode an obtained bitstream corresponding to each vertex to obtain a texture coordinate residual of each vertex;
determine, based on the geometry information and connectivity information, N predicted texture coordinates of each vertex in the target three-dimensional mesh by means of predicting vertices from multiple decoded triangles; and
determine real texture coordinates of each vertex based on the N predicted texture coordinates of each vertex and the texture coordinate residual of each vertex.

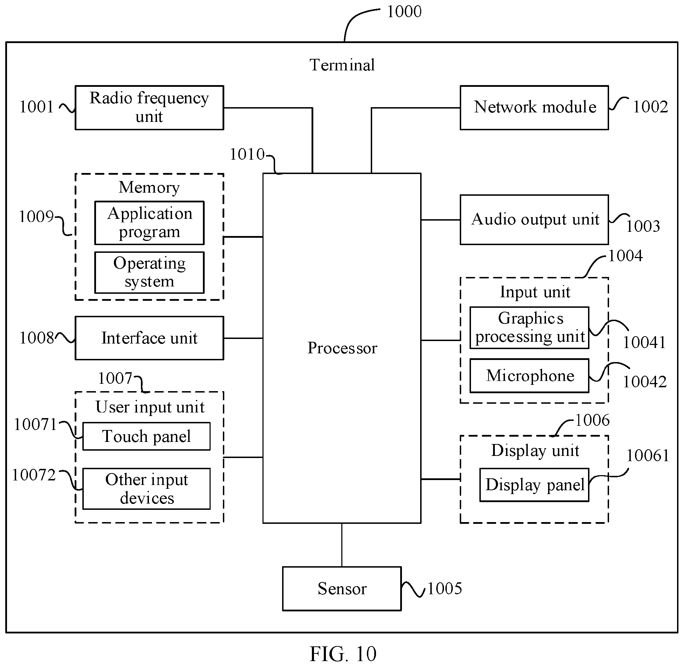

This terminal embodiment corresponds to the foregoing method embodiments used on the terminal side. All processes and implementations in the foregoing method embodiments are applicable to this terminal embodiment, with the same technical effects achieved. Specifically, FIG. 10 is a schematic diagram of a hardware structure of a terminal implementing the embodiments of this application.

A terminal 1000 includes but is not limited to components such as a radio frequency unit 1001, a network module 1002, an audio output unit 1003, an input unit 1004, a sensor 1005, a display unit 1006, a user input unit 1007, an interface unit 1008, a memory 1009, and a processor 1010.

Persons skilled in the art can understand that the terminal 1000 may further include a power source (for example, a battery) for supplying power to the components. The power source may be logically connected to the processor 1010 through a power management system. In this way, functions such as charge management, discharge management, and power consumption management are implemented by using the power management system. The structure of the terminal shown in FIG. 10 does not constitute a limitation on the terminal. The terminal may include more or fewer components than shown in the figure, or combine some components, or have a different component arrangement. Details are not described herein.

It should be understood that in the embodiments of this application, the input unit 1004 may include a graphics processing unit (Graphics Processing Unit, GPU) 10041 and a microphone 10042. The graphics processing unit 10041 processes image data of a static picture or a video that is obtained by an image capture apparatus (for example, a camera) in a video capture mode or an image capture mode. The display unit 1006 may include a display panel 10061. The display panel 10061 may be configured in a form of a liquid crystal display, an organic light-emitting diode, or the like. The user input unit 1007 includes at least one of a touch panel 10071 and other input devices 10072. The touch panel 10071 is also referred to as a touchscreen. The touch panel 10071 may include two parts: a touch detection apparatus and a touch controller. The other input devices 10072 may include but are not limited to a physical keyboard, a functional button (such as a volume control button or a power on/off button), a trackball, a mouse, and a joystick. Details are not described herein again.

In the embodiments of this application, after receiving downlink data from the network-side device, the radio frequency circuit 1001 may transmit it to the processor 1010 for processing. In addition, the radio frequency circuit 1001 may transmit uplink data to the network-side device. Generally, the radio frequency unit 1001 includes but is not limited to an antenna, an amplifier, a transceiver, a coupler, a low noise amplifier, a duplexer, and the like.

The memory 1009 may be configured to store a software program or instructions, and various data. The memory 1009 may mainly include a first storage area where the program or instructions are stored and a second storage area where data is stored. The first storage area may store an operating system, an application program or instructions required by at least one function (for example, an audio playing function or an image playing function), and the like. Further, the memory 1009 may include a volatile memory or non-volatile memory, or the memory 1009 may include both volatile and non-volatile memories. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synch link DRAM, SLDRAM), and a direct rambus random access memory (Direct Rambus RAM, DRRAM). The memory 1009 in this embodiment of this application includes but is not limited to these and any other suitable types of memories.

The processor 1010 may include one or more processing units. Optionally, the processor 1010 integrates an application processor and a modem processor. The application processor mainly processes operations involving an operating system, a user interface, an application program, and the like. The modem processor mainly processes wireless communication signals, for example, a baseband processor. It can be understood that the modem processor may alternatively be not integrated in the processor 1010.

The processor 1010 is configured to:

reconstructing geometry information and connectivity information for a target three-dimensional mesh based on an encoding result of the geometry information and connectivity information of the target three-dimensional mesh; determine, based on the reconstructed geometry information and connectivity information, N predicted texture coordinates of each vertex in the target three-dimensional mesh by means of predicting vertices from multiple encoded triangles; and
encode a texture coordinate residual of each vertex.

Alternatively, the processor 1010 is configured to perform the following operations:

decoding an obtained bitstream corresponding to a target three-dimensional mesh to obtain geometry information and connectivity information of the target three-dimensional mesh, and decode an obtained bitstream corresponding to each vertex to obtain a texture coordinate residual of each vertex;
determining, based on the geometry information and connectivity information, N predicted texture coordinates of each vertex in the target three-dimensional mesh by means of predicting vertices from multiple decoded triangles; and
determining real texture coordinates of each vertex based on the N predicted texture coordinates of each vertex and the texture coordinate residual of each vertex.

An embodiment of this application further provides a readable storage medium, where the readable storage medium stores a program or instructions, and when the program or instructions are executed by a processor, the processes of the foregoing embodiments of the encoding method are implemented or the processes of the foregoing embodiments of the decoding method are implemented, with the same technical effects achieved. To avoid repetition, details are not described herein again.

The processor is a processor in the terminal in the foregoing embodiments. The readable storage medium includes a computer-readable storage medium, for example, a computer read-only memory ROM, a random access memory RAM, a magnetic disk, or an optical disc.

An embodiment of this application further provides a chip, where the chip includes a processor and a communication interface, the communication interface is coupled to the processor, and the processor is configured to run a program or instructions to implement the processes of the foregoing embodiments of the encoding method or the processes of the foregoing embodiments of the decoding method, with the same technical effects achieved. To avoid repetition, details are not described herein again.

It should be understood that the chip mentioned in this embodiment of this application may also be referred to as a system-level chip, a system chip, a chip system, a system-on-chip, or the like.

An embodiment of this application further provides a computer program/program product, where the computer program/program product is stored in a storage medium. The computer program/program product is executed by at least one processor to the foregoing embodiments of the encoding method or the processes of the foregoing embodiments of the decoding method, with the same technical effects achieved. To avoid repetition, details are not described herein again.

An embodiment of this application further provides a system. The system includes an encoder side and a decoder side, where the encoder side executes the processes in the embodiments of the encoding method, and the decoder side executes the processes in the embodiments of the decoding method, with the same technical effects achieved. To avoid repetition, details are not described herein again.

It should be noted that in this specification, the terms "include" and "comprise", or any of their variants are intended to cover a non-exclusive inclusion, such that a process, method, article, or apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. Furthermore, it should be noted that the scope of the methods and apparatuses in the embodiments of this application is not limited to performing the functions in the order shown or discussed, but may also include performing the functions in a substantially simultaneous manner or in a reverse order depending on the functions involved. For example, the described methods may be performed in an order different from that described, and various steps may be added, omitted, or combined. In addition, features described with reference to some examples may be combined in other examples.

By means of the foregoing description of the implementations, persons skilled in the art may clearly understand that the method in the foregoing embodiments may be implemented by software with a necessary general hardware platform. Certainly, the method in the foregoing embodiments may also be implemented by hardware. However, in many cases, the former is a preferred implementation. Based on such an understanding, the technical solutions of this application essentially or the part contributing to the prior art may be implemented in a form of a computer software product. The software product is stored in a storage medium (for example, a ROM/RAM, a magnetic disk, or an optical disc), and includes several instructions for instructing a terminal (which may be a mobile phone, a computer, a server, an air conditioner, a network device, or the like) to perform the method described in the embodiments of this application.

The foregoing describes the embodiments of this application with reference to the accompanying drawings. However, this application is not limited to the foregoing specific embodiments. The foregoing specific embodiments are merely illustrative rather than restrictive. As instructed by this application, persons of ordinary skill in the art may develop many other manners without departing from principles of this application and the protection scope of the claims, and all such manners fall within the protection scope of this application.

## Claims

1.  An encoding method, comprising:

    reconstructing, on an encoder side, geometry information and connectivity information for a target three-dimensional mesh based on an encoding result of the geometry information and connectivity information of the target three-dimensional mesh;

    determining, on the encoder side based on the reconstructed geometry information and connectivity information, N predicted texture coordinates of each vertex in the target three-dimensional mesh by means of predicting vertices from multiple encoded triangles, wherein N is a positive integer greater than 1; and

    encoding, on the encoder side, a texture coordinate residual of each vertex; wherein the texture coordinate residual of the vertex is determined based on the N predicted texture coordinates of the vertex.

2.  The method according to claim 1, wherein the determining, based on the reconstructed geometry information and connectivity information, N predicted texture coordinates of each vertex in the target three-dimensional mesh by means of predicting vertices from multiple encoded triangles comprises:

    selecting, on the encoder side, a first edge from an edge set, and determining a triangle corresponding to the first edge and a triangle with a to-be-encoded vertex as an opposite vertex and excluding the first edge to be target triangles; wherein vertices in the target triangles other than the to-be-encoded vertex are encoded vertices and an opposite vertex of the first edge in the triangle corresponding to the first edge is the to-be-encoded vertex; and

    obtaining, on the encoder side, predicted texture coordinates of the to-be-encoded vertex in the target triangle.

3.  The method according to claim 2, wherein the obtaining predicted texture coordinates of the to-be-encoded vertex in the target triangle comprises:

    obtaining, on the encoder side, texture coordinates of a projection point of the to-be-encoded vertex on the first edge based on geometry coordinates of vertices of the target triangle; and

    obtaining, on the encoder side, the predicted texture coordinates of the to-be-encoded vertex based on the texture coordinates of the projection point.

4.  The method according to claim 3, wherein the obtaining texture coordinates of a projection point of the to-be-encoded vertex on the first edge based on geometry coordinates of vertices of the target triangle comprises:

    obtaining, on the encoder side, the texture coordinates of the projection point of the to-be-encoded vertex on the first edge based on a sum of $\overrightarrow{NX}_{uv}$ and $N_{uv}$, or obtaining the texture coordinates of the projection point of the to-be-encoded vertex on the first edge based on a difference between $N_{uv}$ and $\overrightarrow{XN}_{uv}$; wherein

    $N_{uv}$ represents texture coordinates of a vertex N on the first edge of the target triangle, $\overrightarrow{NX}_{uv}$ represents a vector from the vertex N on the first edge of the target triangle to texture coordinates of a projection point X of the to-be-encoded vertex on the first edge, and $\overrightarrow{XN}_{uv}$ represents a vector from the projection point X on the first edge to the texture coordinates of the vertex N on the first edge of the target triangle.

5.  The method according to claim 3, wherein the obtaining predicted texture coordinates of the to-be-encoded vertex based on the texture coordinates of the projection point comprises:

    in a case that a first vertex O corresponding to the first edge is an encoded vertex or a first triangle is not a degenerate triangle, obtaining, on the encoder side, texture coordinates of the to-be-encoded vertex based on $X_{uv}$ and $\overrightarrow{XC}_{uv}$; wherein the first triangle and the target triangle share the first edge, and an opposite vertex of the first edge in the first triangle is the first vertex O; where

$X_{uv}$ represents texture coordinates of a projection point X of the to-be-encoded vertex on the first edge, and $\overrightarrow{XC}_{uv}$ represents a vector from the projection point X of the to-be-encoded vertex on the first edge to the texture coordinates $C_{uv}$ of the to-be-encoded vertex.

6. The method according to claim 3, wherein the obtaining, on the encoder side, predicted texture coordinates of the to-be-encoded vertex based on the texture coordinates of the projection point comprises:

   in a case that a first vertex O corresponding to the first edge is an uncoded vertex or a first triangle is a degenerate triangle, obtaining, on the encoder side, texture coordinates of the to-be-encoded vertex based on $X_{uv}$ and $\overrightarrow{XC}_{uv}$, and encoding a target identifier of the to-be-encoded vertex; wherein the first triangle and the target triangle share the first edge, and an opposite vertex of the first edge in the first triangle is the first vertex O; wherein

   $X_{uv}$ represents texture coordinates of a projection point X of the to-be-encoded vertex on the first edge, and $\overrightarrow{XC}_{uv}$ represents a vector from the projection point X of the to-be-encoded vertex on the first edge to the texture coordinates $C_{uv}$ of the to-be-encoded vertex.

7. The method according to claim 2, wherein before the selecting a first edge from an edge set, the method further comprises:

   selecting, on the encoder side, one initial triangle based on the reconstructed geometry information and connectivity information; and
   encoding, on the encoder side, texture coordinates of three vertices of the initial triangle, and storing three edges of the initial triangle into the edge set.

8. The method according to claim 2, wherein after the obtaining predicted texture coordinates of the to-be-encoded vertex in the target triangle, the method further comprises:
   storing, on the encoder side, a second edge of the target triangle into the edge set and removing the first edge from the edge set, wherein the second edge is an edge of the target triangle not contained in the edge set.

9. The method according to claim 1, wherein the encoding a texture coordinate residual of each vertex comprises:

   determining, on the encoder side, target values corresponding to the N predicted texture coordinates of any one vertex as target texture coordinates of the vertex; and
   encoding, on the encoder side, the texture coordinate residual of the vertex, wherein the residual is determined based on real texture coordinates of the vertex and the target texture coordinates of the vertex.

10. A decoding method, comprising:

    decoding, on a decoder side, an obtained bitstream corresponding to a target three-dimensional mesh to obtain geometry information and connectivity information of the target three-dimensional mesh, and decoding an obtained bitstream corresponding to each vertex to obtain a texture coordinate residual of each vertex;
    determining, on the decoder side based on the geometry information and connectivity information, N predicted texture coordinates of each vertex in the target three-dimensional mesh by means of predicting vertices from multiple decoded triangles, wherein N is a positive integer greater than 1; and
    determining, on the decoder side, real texture coordinates of each vertex based on the N predicted texture coordinates of each vertex and the texture coordinate residual of each vertex.

11. The method according to claim 10, wherein the determining, based on the geometry information and connectivity information, N predicted texture coordinates of each vertex in the target three-dimensional mesh by means of predicting vertices from multiple decoded triangles comprises:

    selecting, on the decoder side, a first edge from an edge set, and determining a triangle corresponding to the first edge and a triangle with a to-be-decoded vertex as an opposite vertex and excluding the first edge to be target triangles; wherein vertices in the target triangles other than the to-be-decoded vertex are decoded vertices and an opposite vertex of the first edge in the triangle corresponding to the first edge is the to-be-encoded vertex; and
    obtaining, on the decoder side, predicted texture coordinates of the to-be-decoded vertex in the target triangle.

12. The method according to claim 11, wherein the obtaining predicted texture coordinates of the to-be-decoded vertex in the target triangle comprises:

obtaining, on the decoder side, texture coordinates of a projection point of the to-be-decoded vertex on the first edge based on geometry coordinates of vertices of the target triangle; and
obtaining, on the decoder side, the predicted texture coordinates of the to-be-decoded vertex based on the texture coordinates of the projection point.

13. The method according to claim 12, wherein the obtaining texture coordinates of a projection point of the to-be-decoded vertex on the first edge based on geometry coordinates of vertices of the target triangle comprises:

obtaining, on the decoder side, the texture coordinates of the projection point of the to-be-encoded vertex on the first edge based on a sum of $\overrightarrow{\mathbf{NX}}_{uv}$ and $N_{uv}$, or obtaining the texture coordinates of the projection point of the to-be-encoded vertex on the first edge based on a difference between $N_{uv}$ and $\overrightarrow{\mathbf{XN}}_{uv}$; wherein
$N_{uv}$ represents texture coordinates of a vertex N on the first edge of the target triangle, $\overrightarrow{\mathbf{NX}}_{uv}$ represents a vector from the vertex N on the first edge of the target triangle to texture coordinates of a projection point X of the to-be-decoded vertex on the first edge, and $\overrightarrow{\mathbf{XN}}_{uv}$ represents a vector from the projection point X on the first edge to the texture coordinates of the vertex N on the first edge of the target triangle.

14. The method according to claim 12, wherein the obtaining predicted texture coordinates of the to-be-decoded vertex based on the texture coordinates of the projection point comprises:

in a case that a first vertex O corresponding to the first edge is a decoded vertex or a first triangle is not a degenerate triangle, obtaining, on the decoder side, texture coordinates of the to-be-decoded vertex based on $X_{uv}$ and $\overrightarrow{\mathbf{XC}}_{uv}$; wherein the first triangle and the target triangle share the first edge, and an opposite vertex of the first edge in the first triangle is the first vertex O; where
$X_{uv}$ represents texture coordinates of a projection point X of the to-be-encoded vertex on the first edge, and $\overrightarrow{\mathbf{XC}}_{uv}$ represents a vector from the projection point X of the to-be-encoded vertex on the first edge to the texture coordinates $C_{uv}$ of the to-be-encoded vertex.

15. The method according to claim 12, wherein the obtaining predicted texture coordinates of the to-be-decoded vertex based on the texture coordinates of the projection point comprises:

in a case that a first vertex O corresponding to the first edge is an undecoded vertex or a first triangle is a degenerate triangle, determining, on the decoder side, texture coordinates of the to-be-decoded vertex based on a retrieved target identifier of the to-be-decoded vertex, $X_{uv}$, and $\overrightarrow{\mathbf{XC}}_{uv}$; wherein the first triangle and the target triangle share the first edge, and an opposite vertex of the first edge in the first triangle is the first vertex O; wherein
$X_{uv}$ represents texture coordinates of a projection point X of the to-be-encoded vertex on the first edge, and $\overrightarrow{\mathbf{XC}}_{uv}$ represents a vector from the projection point X of the to-be-encoded vertex on the first edge to the texture coordinates $C_{uv}$ of the to-be-encoded vertex.

16. The method according to claim 11, wherein before the selecting a first edge from an edge set, the method further comprises:

selecting, on the decoder side, one initial triangle based on the geometry information and connectivity information; and
decoding, on the decoder side, texture coordinates of three vertices of the initial triangle, and storing three edges of the initial triangle into the edge set.

17. The method according to claim 11, wherein after the obtaining predicted texture coordinates of the to-be-decoded vertex in the target triangle, the method further comprises:
storing, on the decoder side, a second edge of the target triangle into the edge set and removing the first edge from the edge set, wherein the second edge is an edge of the target triangle not contained in the edge set.

18. The method according to claim 10, wherein the determining real texture coordinates of each vertex based on the N predicted texture coordinates of each vertex and the texture coordinate residual of each vertex comprises:

determining, on the decoder side, target values corresponding to the N predicted texture coordinates of any one vertex as target texture coordinates of the vertex; and
performing, on the decoder side, an addition operation on the target texture coordinates of the vertex and the texture coordinate residual of the vertex to determine the real texture coordinates of the vertex.

19. An encoding apparatus, comprising:

a reconstructing module, configured to reconstruct geometry information and connectivity information for a target three-dimensional mesh based on an encoding result of the geometry information and connectivity information of the target three-dimensional mesh;
a determining module, configured to determine, based on the reconstructed geometry information and connectivity information, N predicted texture coordinates of each vertex in the target three-dimensional mesh by means of predicting vertices from multiple encoded triangles, wherein N is a positive integer greater than 1; and
an encoding module, configured to encode a texture coordinate residual of each vertex; wherein the texture coordinate residual of the vertex is determined based on the N predicted texture coordinates of the vertex.

20. A decoding apparatus, comprising:

a decoding module, configured to: decode an obtained bitstream corresponding to a target three-dimensional mesh to obtain geometry information and connectivity information of the target three-dimensional mesh, and decode an obtained bitstream corresponding to each vertex to obtain a texture coordinate residual of each vertex;
a first determining module, configured to determine, based on the geometry information and connectivity information, N predicted texture coordinates of each vertex in the target three-dimensional mesh by means of predicting vertices from multiple decoded triangles; and
a second determining module, configured to determine real texture coordinates of each vertex based on the N predicted texture coordinates of each vertex and the texture coordinate residual of each vertex.

21. A terminal, comprising a processor and a memory, wherein a program or instructions capable of running on the processor are stored on the memory, and when the program or instructions are executed by the processor, the steps of the encoding method according to any one of claims 1 to 9 are implemented or the steps of the decoding method according to any one of claims 10 to 18 are implemented.

22. A readable storage medium, wherein the readable storage medium stores a program or instructions, and when the program or instructions are executed by a processor, the steps of the encoding method according to any one of claims 1 to 9 are implemented or the steps of the decoding method according to any one of claims 10 to 18 are implemented.

Reconstruct geometry information and connectivity information for a target three-dimensional mesh based on encoding results of the geometry information and connectivity information of the target three-dimensional mesh    ⌇ S101

Determine, based on the reconstructed geometry information and connectivity information, N predicted texture coordinates of each vertex in the target three-dimensional mesh by means of predicting vertices from multiple encoded triangles    ⌇ S102

Encode a texture coordinate residual of each vertex    ⌇ S103

FIG. 1

C

P.O    N.O

N    P

FIG. 2

FIG. 3

FIG. 4

Decode an obtained bitstream corresponding to a target three-dimensional mesh to obtain geometry information and connectivity information of the target three-dimensional mesh, and decode an obtained bitstream corresponding to each vertex to obtain a texture coordinate residual of each vertex — S501

Determine, based on the geometry information and connectivity information, N predicted texture coordinates of each vertex in the target three-dimensional mesh by means of predicting vertices from multiple decoded triangles — S502

Determine real texture coordinates of each vertex based on the N predicted texture coordinates of each vertex and the texture coordinate residual of each vertex — S503

FIG. 5

Bitstream → Decode a bitstream

Decode geometry information

Decode connectivity information

Decode UV coordinates

Decode a three-dimensional mesh

FIG. 6

700

Encoding apparatus

Reconstructing module — 701

Determining module — 702

Encoding module — 703

FIG. 7

800

Decoding apparatus

Decoding module — 801

First determining module — 802

Second determining module — 803

FIG. 8

FIG. 9

FIG. 10

## INTERNATIONAL SEARCH REPORT

| | International application No. |
|---|---|
| | **PCT/CN2023/103922** |

**A. CLASSIFICATION OF SUBJECT MATTER**

H04N19/40(2014.01)i; G06T9/00(2006.01)i; H04N13/00(2018.01)i

According to International Patent Classification (IPC) or to both national classification and IPC

**B. FIELDS SEARCHED**

Minimum documentation searched (classification system followed by classification symbols)

IPC:H04N

Documentation searched other than minimum documentation to the extent that such documents are included in the fields searched

Electronic data base consulted during the international search (name of data base and, where practicable, search terms used)

CNTXT, ENTXTC, DWPI, VEN: 编码, 残差, 顶点, 连接, 三维, 投影, 网格, 纹理, 压缩, 预测, 重构, 重建, "3d", three-dimentional, mesh, encod+, compress+, texture atlas, predict+, residual, project, reconstruct+

**C. DOCUMENTS CONSIDERED TO BE RELEVANT**

| Category* | Citation of document, with indication, where appropriate, of the relevant passages | Relevant to claim No. |
|---|---|---|
| X | US 2020098137 A1 (GOOGLE L.L.C.) 26 March 2020 (2020-03-26)<br>description, paragraphs 0016-0088, and figures 1-9 | 1-22 |
| A | CN 101626509 A (BEIJING UNIVERSITY OF TECHNOLOGY) 13 January 2010 (2010-01-13)<br>entire document | 1-22 |
| A | CN 102625126 A (BEIJING UNIVERSITY OF TECHNOLOGY) 01 August 2012 (2012-08-01)<br>entire document | 1-22 |
| A | CN 113938667 A (SHENZHEN PROMETHEUS VISUAL TECHNOLOGY CO., LTD.) 14 January 2022 (2022-01-14)<br>entire document | 1-22 |
| A | US 2013106834 A1 (CURINGTON, Ian) 02 May 2013 (2013-05-02)<br>entire document | 1-22 |
| A | US 2021090301 A1 (APPLE INC.) 25 March 2021 (2021-03-25)<br>entire document | 1-22 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **04 August 2023** | **15 August 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

| Patent document cited in search report | | | Publication date (day/month/year) | Patent family member(s) | | | Publication date (day/month/year) |
|---|---|---|---|---|---|---|---|
| US | 2020098137 | A1 | 26 March 2020 | EP | 3629293 | A1 | 01 April 2020 |
| CN | 101626509 | A | 13 January 2010 | None | | | |
| CN | 102625126 | A | 01 August 2012 | None | | | |
| CN | 113938667 | A | 14 January 2022 | None | | | |
| US | 2013106834 | A1 | 02 May 2013 | EP | 2592596 | A2 | 15 May 2013 |
| | | | | HK | 1182208 | A0 | 22 November 2013 |
| US | 2021090301 | A1 | 25 March 2021 | US | 2023030913 | A1 | 02 February 2023 |
| | | | | WO | 2021062044 | A1 | 01 April 2021 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210800663